# EUROPEAN PATENT APPLICATION

(11) **EP 4 432 451 A1**
(43) Date of publication of application: **18.09.2024**
(21) Application number: 22893247.1
(22) Date of filing: 11.11.2022
(51) Int. Cl.: H01M 50/531, H01M 50/538, B21D 22/02, B21D 1/02, B30B 11/04

(54) **TAB FORMING DEVICE FOR JELLY-ROLL TYPE ELECTRODE ASSEMBLY, AND FORMING METHOD USING SAME**

(30) Priority: 11.11.2021 KR 20210155211; 17.03.2022 KR 20220033336
(71) Applicant: LG Energy Solution, Ltd., Seoul 07335 (KR)
(72) Inventor: LEE, Soono, Daejeon 34122 (KR); CHOI, Kyuhyun, Daejeon 34122 (KR); KONG, Jinhak, Daejeon 34122 (KR); LEE, Je Jun, Daejeon 34122 (KR); LIM, Jae Won, Daejeon 34122 (KR)
(74) Representative: Goddar, Heinz J.
(86) International application number: PCT/KR2022/017692
(87) International publication number: WO 2023/085828

(57) **Abstract**

A forming device and a forming method thereof bends an electrode tab portion that is exposed to the end portion of a jelly roll-type electrode assembly in the axial direction thereof, in a radial direction. The forming device may include a forming jig bending the electrode tab, and a flattening jig flattening the bent electrode tab further. The forming jig comprises a pre-forming perimeter surface and a bend inducing surface. The pre-forming perimeter surface has an inner radius that increases from a base end toward a leading end elongated in a pressing direction. The bend inducing surface connects to the base end of the pre-forming perimeter surface, and extends inwards, in the radial direction.

## Description

### [Technical Field]

This application claims priority to and the benefit of Korean Patent Application No. 10-2021-0155217 filed on November 11, 2021 and Korean Patent Application No. 10-2022-0033336 filed on March 17, 2022, the disclosure of which is incorporated herein by reference in its entirety.

The present disclosure relates to a tab forming device of a jelly roll-type electrode assembly and a forming method using the same, and in particular, a forming device and a forming method thereof for bending an electrode tab portion exposed to the end portion of an electrode assembly in the axial direction thereof, in a radial direction.

### [Background Art]

Currently, the size of a secondary battery (a battery cell) tends to increase, to ensure high-energy density of a battery pack and a reduction in manufacturing costs.

Ordinarily, a conventional cylindrical secondary battery has a structure in which a tab connecting a jelly roll and an external terminal is weld and connected to a jelly roll-foil. However, in the case of a cylindrical secondary battery having the structure, the path of current is limited, and resistance of a jelly roll itself is very high. Additionally, as part of an effort to reduce resistance, the number of tabs connecting the jelly roll and an external terminal increase. However, an increase in the number of tabs is not enough to decrease resistance to a desired level and to ensure sufficient paths of current.

As current supplied to a secondary battery increases, research has been performed into technologies for developing a novel jell roll-structure in which non-coated portions exposed to the end portion of a jelly roll in the axial direction thereof connect to a current collecting plate, by welding and the like, in the state of bending in a radial direction and being flatten, and the current collecting plate connects to an external terminal, to reduce resistance.

To produce an electrode assembly having the above structure, non-coated portions need to be exposed to both axial end portions of an electrode assembly in the axial direction thereof, and bend in the radial direction. The bending processing is ordinarily carried out with a forming jig.

Conventionally, first processing where the end portion of an non-coated portion is collected in a way that the end portion extending straight in an axial direction inclines in the radial direction is done with an iris shutter-type jig, second processing where the non-coated portion inclined in the radial direction is collected further and presses is done with a jig rotating around a rotation axis corresponding to the axis of an electrode assembly, and third processing where an electrode inclined is finally pressed and flattened at a maximum level is done with a flattening jig.

In the case where the second processing is performed without the first processing where the end portion of the non-coated portion is collected in a way that the end portion inclines in the radial direction, buckling of the non-coated portion occurs, causing the collapse of the non-coated portion. To prevent this from happening, the first processing where the end portion of the non-coated portion is collected in the radial direction is required.

Further, in the case where the non-coated portion is pressed by the jig without rotating the jig in the second processing, the bucking of the non-coated portion occurs due to a frictional force between the jig and the end portion of the non-coated portion, causing the collapse of the non-coated portion. To prevent this from happening, the process, in which the non-coated portion is pressed while the jig rotates, is required in the second processing.

As described above, the conventional bending and forming processing of the non-coated portion of a jelly roll-type electrode assembly require a lot of steps, and facilities required in each step should have a complex structure.

In the steps and complex facilities, the processing cycles and the sizes of the facilities can hardly decrease.

### [Description of Invention]

### [Technical Problems]

The objective of the present disclosure is to provide a tab forming device and a forming method using the same that ensures a decrease in the number of processing steps of bending in a radial direction and flattening a non-coated portion, exposed to the axial end portion of a jelly roll-type electrode assembly in the axial direction thereof, and simplifies the processing in each step.

The objective of the present disclosure is to provide a forming jig shape enabling tab forming readily, without the rotation of the jig.

The objective of the present disclosure is to provide a jig shape in which the end portion of the non-coated portion is collected in the radial direction and pressed at the same time, with a single forming jig.

The objective of the present disclosure is to provide a tab forming device and a forming method using the same that bends a tab to a significant degree with a single forming jig, without causing buckling of the tab, and helps to reduce the number of processing steps.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

A tab forming device according to the present disclosure may be used for a jelly roll-type electrode assembly in which a first electrode, a separator, and a second electrode, which have a predetermined width and are elongated in a winding direction, are stacked in the order of the first electrode, the separator, the second electrode and the separator, and then are wound around a central axis.

In the electrode assembly, the first electrode may be provided with an electrode tab that is elongated and exposed further to an axial end portion of the electrode assembly than the separator in an axial direction.

The electrode tab may be disposed from the core of the electrode assembly to the outer circumference thereof, in a spiral shape.

The electrode tab may be formed into a notching tab where notching is performed at intervals, or a continuous tab where notching is not performed, along the winding direction.

The electrode tab may have a height at which the electrode tab protrudes in the axial direction, and the height may increase from the core of the electrode assembly toward the outer circumference thereof, gradually or in stages.

The electrode tab may not be provided or may be provided in a form protruding short so as not to be bent, to a certain position from the core, and may be provided in a form to be bent from the certain position to the outer circumference of the electrode assembly.

The electrode tab may not be provided in the last one turn of the electrode assembly.

The tab forming device may be used to bend in a radial direction and flatten the electrode tab.

As the electrode tab is bent and flattened by the tab forming device, electrode tabs may be processed to overlap in a plurality of layers, in the axial direction, in the axial end portion of the electrode assembly.

A current collecting plate may electrically connect onto the planarized electrode tab, by welding and the like.

The forming device may comprise a forming jig bending the electrode tab, and a flattening jig flattening the bend electrode tab further.

The forming jig and the flattening jig may comprise a steel material. At least the surfaces of the forming jig and the flattening jig, contacting the electrode tab, may comprise a steel material.

The forming jig comprises a pre-forming perimeter surface and a bend inducing surface.

The pre-forming perimeter surface has a shape in which an inner radius increases from a base end of the pre-forming perimeter surface toward a leading end of the pre-forming perimeter surface. The leading end is disposed further in a pressing direction than the base end.

The inner radius of the leading end of the pre-forming perimeter surface is greater than the outermost radius of the electrode tab, and the inner radius of the base end of the pre-forming perimeter surface is less than the outermost radius of the electrode tab.

The inner radius of the base end may be 1.5 mm to 0.5 mm less than the radius of the electrode assembly. The inner radius of the base end may be about 1.0 mm less than the radius of the electrode assembly.

A taper angle formed by the pre-forming perimeter surface with respect to the pressing direction may be 10 to 30 degrees. Specifically, the taper angle may be 18 to 22 degrees. The taper angle may be about 19 degrees.

The bend inducing surface connects to the base end of the pre-forming perimeter surface and extends radially inwards.

The bend inducing surface inclines in a direction opposite to the pressing direction, as it extends radially inward.

An inclination angle formed by the bend inducing surface with respect to a planar surface perpendicular to the central axis of the electrode assembly may be 5 to 20 degrees. Specifically, the inclination angle may be 8 to 13 degrees. The inclination angle may be about 10 degrees.

A front end guide surface may be provided between the pre-forming perimeter surface and the bend inducing surface.

The front end guide surface may be a curved surface having a predetermined radius of curvature.

The radius of curvature may be 1 mm to 3 mm. Specifically, the radius of curvature may be about 2 mm.

A flat surface may be provided in a radial inner end portion of the bend inducing surface.

The pre-forming perimeter surface and the bend inducing surface of the forming jig may comprise a steel material.

The front end guide surface and flat surface of the forming jig may also comprise a steel material.

The flattening jig may comprise a flat pressing surface facing the pressing direction.

According the present disclosure, a forming method of an electrode tab of an electrode assembly, using the forming device, is provided.

The forming method of an electrode tab may be comprised of two steps comprising applying a forming jig and then a flattening jig.

Step one comprises relatively moving the forming jig in the pressing direction parallel to the central axis relatively, and bending an electrode tab of the electrode assembly inwards, in a radial direction.

Step two comprises moving the flattening jig in the pressing direction parallel to the central axis relatively and pressing and planarizing the bent electrode tab of the electrode assembly.

### [Advantageous Effects]

According to the present disclosure, the process of bending and planarizing an electrode tab of a jelly roll-type electrode assembly in a radial direction can be simplified in two steps.

According to the present disclosure, the simplification of the processing can lead to a small and simple processing facility and a reduction in the processing cycle can lead to improvement in productivity.

According to the present disclosure, the possibility of the buckling of an electrode tab may be significantly reduced during the processing of the electrode tab.

Specific effects are described along with the above-described effects in the section of detailed description.

### [Brief Description of Drawings]

FIG. 1 is a plan view showing a first embodiment of a first electrode with a non-coated portion and a coated portion.
FIG. 2 is a side view showing that electrodes and a separator are laminated to be wound into a jelly roll-type electrode assembly.
FIG. 3 is a front view showing the processes of bending an electrode portion, as an electrode tab, exposed in both axial end portions of a jelly roll-type electrode assembly in a radial direction, and stacking a current collector.
FIG. 4 is a plan view showing a second embodiment of the first electrode with a non-coated portion and a coated portion.
FIG. 5 is a front view showing a jelly roll-type electrode assembly to which the electrode in FIG. 4 is applied.
FIG. 6 is a view showing an electrode assembly and a forming jig of a forming device for bending an electrode tab provided in the axial end portion of the electrode assembly.
FIG. 7 is a plan view of the forming jig in FIG. 6.
FIG. 8 is a view showing the forming jig of FIG. 6 as a cross section.
FIG. 9 is a view showing that an electrode tab contacts a pre-forming perimeter surface and starts to bend as the forming jig in FIG. 8 presses an electrode assembly.
FIG. 10 is a view showing electrode tabs start to contact a front end guide surface as processing proceeds further in FIG. 9, and the electrode tab is bent further by the front end guide surface.
FIG. 11 is a view showing that an electrode tab in all winding turns is pressed by the front end guide surface and bent radially inwards.
FIG. 12 is a view showing a state of using a flattening jig of a forming device for an electrode tab of an electrode assembly having bent with a forming jig.
FIG. 13 is a view showing a process of flattening a bent electrode tab, with the flattening jig in FIG. 12.

### [Description of reference numerals]

10: Electrode assembly
r: Radius
11: Electrode tab (first electrode tab)
q: Outermost radius
111: Notching tab
12: Electrode tab (second electrode tab)
15: First electrode
151: First electrode active material
16: Separator
17: Second electrode
19: Insulation coating
H1: Winding hole (Hollow hole part)
X: Lengthwise direction, circumferential direction, winding direction
Y: Width direction, winding axis, axial direction, central axis, height direction.
Z: Radial direction, tangential line
21: Current collecting plate (first current collecting plate)
22: Current collecting plate (second current collecting plate)
30: Forming jig
31: Pre-forming perimeter surface
B: Taper angle
C: Inner radius of base end
E: Inner radius of leading end
33: Front end guide surface
R: Radius of curvature
35: Bend inducing surface
A: Inclination angle
37: Flat surface
50: Flattening jig
51: Perimeter guide
52: Jig body
53: Pressing surface
D: Pressing direction

### [Detailed Description of Exemplary Embodiments]

The above-described aspects, features and advantages are specifically described hereafter with reference to the accompanying drawings such that one having ordinary skill in the art to which the present disclosure pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Further, the singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

In the present disclosure, a direction along the lengthwise direction of the winding axis of an electrode assembly wound in a jelly roll shape is referred to an axial direction Y. Additionally, a direction in which the winding axis is surrounded is referred to as a circumferential direction or a perimeter direction X. The circumferential direction and the perimeter direction can correspond to a winding direction. Further, a direction closer to the winding axis or farther from the winding axis is referred to as a radius direction or a radial direction Z. Specifically, a direction closer to the winding axis is referred to as a centripetal direction, and a direction farther from the winding axis is referred to as a centrifugal direction.

Hereafter, preferred embodiments according to the present disclosure are described with reference to the accompanying drawings.

### [Electrode assembly]

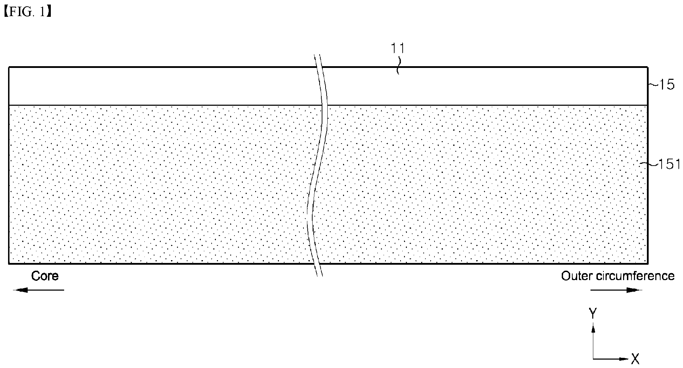

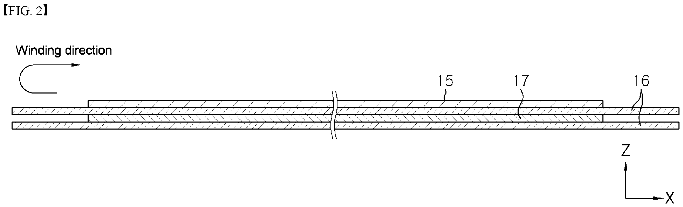

Hereafter, examples of an electrode assembly for which a forming device in the present disclosure can be used are described with reference to FIGS. 1 to 5. However, the application of the forming device in the present disclosure is not limited to an electrode assembly having the structure described hereafter.

An electrode assembly 10, to which the forming device in the present disclosure will be applied, is formed in a way that a first electrode 15, a separator 16, and a second electrode 17, which are formed into a sheet having a predetermined width in the width direction Y and being elongated in the lengthwise direction X, are laminated in the order of the first electrode 15, the separator 16, the second electrode 17 and the separator 16, at least once, and are wound around the winding axis Y.

The first electrode 15 and/or the second electrode 17 are manufactured in a way that a metal foil is coated with an active material. The first electrode 15 and/or the second electrode 17 comprises a coated portion region where a metal foil is coated with an active material, and a non-coated portion region where a metal foil is not coated with an active material and its surface is exposed. At one end of the width direction Y, that is, the axial direction Y of the first electrode 15, there is a non-coated portion region where an active material is not coated, which is a first electrode tab 11 region and/or at the other end of the width direction Y, that is, the axial direction Y of the second electrode 17, there is a non-coated portion region where an active material is not coated, which is a second electrode tab 12 region. The electrode tab can be electrically connected to an electrode terminal through a current collecting plate provided in a battery can (not shown) that accommodates the electrode assembly 10.

For the electrode assembly 10 to be wound in a jelly roll shape, the first electrode 15, the separator 16, and the second electrode 17, and the separator 16 are laminated, in a way that the first electrode tab 11 and the second electrode tab 12 are further exposed or protruded respectively from one end and the other end of the width direction Y of the separator 16. The stack laminated and formed as described above is wound around the Y axis, in the X direction, to manufacture the electrode assembly 10.

The electrode assembly 10 applied in the present disclosure may be a jelly roll-type one. At this time, an additional separator for insulation from a battery can may be provided on the outer circumferential surface of the electrode assembly 10.

The first electrode 15 comprises a first electrode current collector (or a first electrode metal foil) and a first electrode active material 151 coated on one or both surfaces of the first electrode current collector. A non-coated portion where no first electrode active material is coated exists at one end of the width direction Y of the first electrode current collector. The non-coated portion functions as a first electrode tab 11. The first electrode tab 11 is provided at an upper portion in the height direction of the electrode assembly 10.

The second electrode includes a second electrode current collector (or a second electrode metal foil) and a second electrode active material coated on one or both surfaces of the second electrode current collector. A non-coated portion where no second electrode active material is coated exists at the other end of the width direction Y of the second electrode current collector. The non-coated portion functions as a second electrode tab 12. The second electrode tab 12 is provided at a lower portion in height direction of the electrode assembly.

The first electrode tab 11 and the second electrode tab 12, for example, may be a positive electrode tab and a negative electrode tab respectively or vice versa.

In the present disclosure, a positive electrode active material applied to an anode plate and a negative electrode active material applied to a cathode plate that are known to one in the art can be used unlimitedly.

In one example, the positive electrode active material may include an alkali metal compound expressed by a general formula A[AₓM_{y}]O_{2+z} (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; x≥0, 1≤x+y≤2, -0.1≤z≤2; and the stoichiometric modulus x, y and z are selected so that the compound maintains electrical neutrality).

In another example, the positive electrode active material may be an alkali metal compound xLiM¹O₂-(1-x)Li₂M²O₃ disclosed in U.S. Pat. Nos. 6,677,082, 6,680,143, et al., wherein M' includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from the Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally including F; 0<a≤2, 0≤x≤1, 0≤y≤1, 0≤z<1; the stoichiometric coefficient a, x, y and z are selected so that the compound maintains electrical neutrality), or Li₃M₂(PO₄)₃ (M includes at least one element selected from Ti, Si, Mn, Fe, Co, V, Cr, Mo, Ni, Al, Mg and Al).

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, both low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiOₕ, hafnia (HfO₂), SrTiO₃, TiO₂, Al₂O₃, ZrO₂, SnO₂, CeO₂, MgO, CaO, ZnO and Y₂O₃.

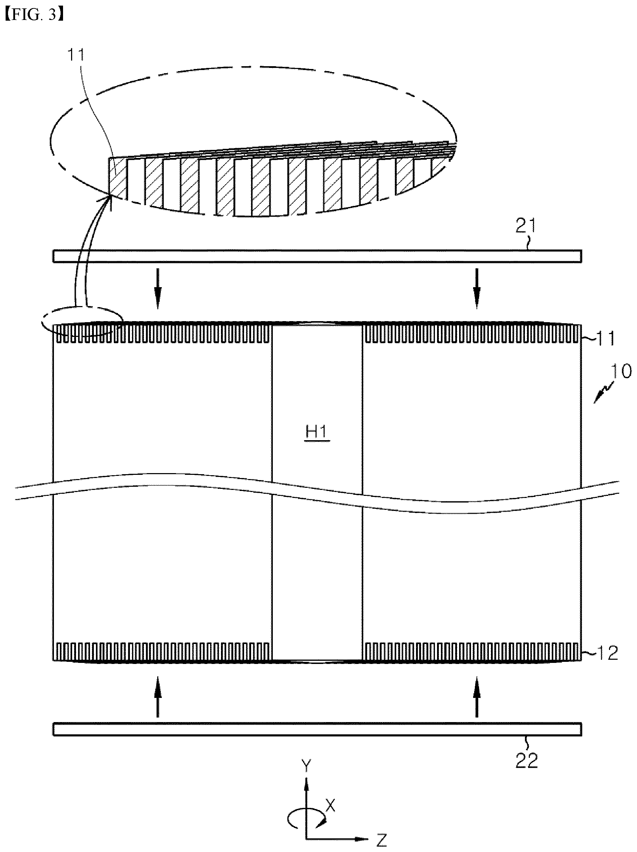

A current collecting plate 21, 22 may electrically connect to the first electrode tab 11 and the second electrode tab 12 respectively. The first electrode tab 11 and the second electrode tab 12 may be coupled to a first current collecting plate 21 and a second current collecting plate 22 respectively, in the state of being bent in the radial direction, as illustrated in FIG. 3, through welding and the like.

The forming device in the present disclosure is a processing device for bending the first electrode tab 11 and the second electrode tab 12 in the radial direction.

The shapes of the first electrode tab 11 and the second electrode tab 12 to which the forming device can be applied are not limited to the above-described ones. The first electrode tab 11 in FIG. 1 is formed in a way that continuously extends in the winding direction (lengthwise direction) X. However, the first electrode tab 11 may also be formed in a discrete way in the winding direction (lengthwise direction) X.

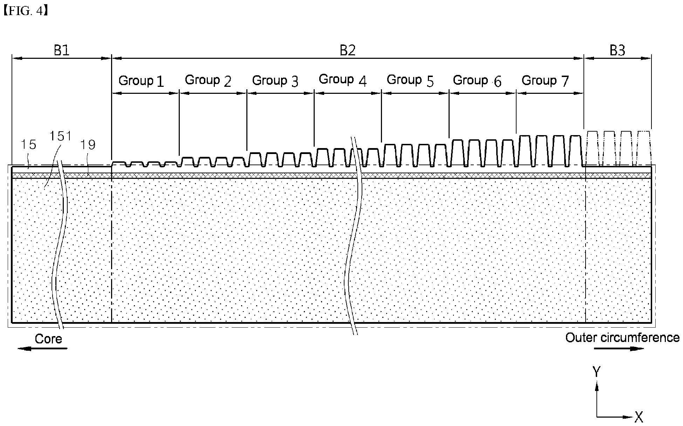

Referring to FIG. 4, the first electrode tab 11 provided at the first electrode 15 is formed in a way that is spaced at predetermined intervals along the lengthwise direction and cut in the axial direction (the height direction) Y. In the first electrode tab 11, a plurality of notching tabs 111 may be formed in a way the notching tabs 111 are arranged along the lengthwise direction, by the cut line.

The notching tabs 111 formed by the cut line may have an isosceles trapezoid shape or a rectangle shape, as illustrated, and may also have a variety of shapes such as a half circle shape, a half oval shape and the like. Additionally, notching tabs 111 having a variety of shapes may be used together, and the widths and heights of the notching tabs 111, a gap among the notching tabs 111, and the like may remain constant, and according to a predetermined rule, may change.

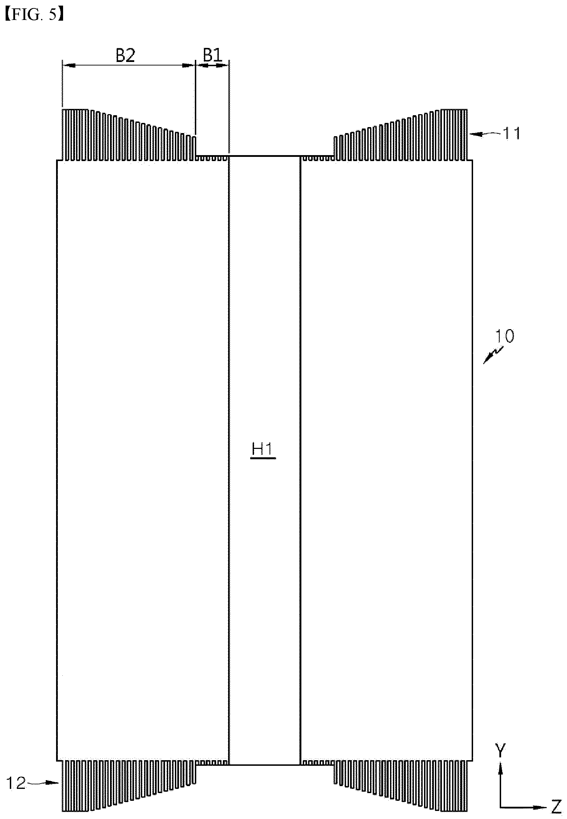

As illustrated in FIGS. 4 and 5, the notching tabs 111 may be omitted in a predetermined section B1 near the core, and the height at which the notching tabs 111 protrude in the axial direction may increase from the core toward the outer circumference gradually or in groups, in a section B2 where the notching tabs 111 are provided. The notching tabs 111 may be removed for convenience of processing, in the section B3 of one last turn.

In the case where the electrode tab 11 is formed in a way that the notching tabs 111 are formed, as described above, the lower end portions of the notching tabs 111 may bend as the electrode tab 11 bends in the radial direction.

FIG. 4 shows that an insulation coating 19 is additionally formed at the boundary between the non-coated portion and the coated portion. The insulation coating 19 improves the strength of the lower end portion of the electrode tab 11, induces the lower end portions of the notching tabs 111 to bend during the process of bending the electrode tab 11, and prevents a short circuit caused by contact between the bent electrode tab 11 and an electrode 17 of a different polarity.

A cylindrical battery cell comprising a battery can accommodating the electrode assembly 10 may be a cylindrical battery cell having a form factor ratio (a value calculated by dividing a diameter of the cylindrical battery cell by a height of the cylindrical battery cell, i.e., a ratio of diameter Φ to height H) that is approximately greater than 0.4.

Here, the form factor means a value representing the diameter and height of a cylindrical battery cell. Cylindrical battery cells according to an embodiment of the present invention may be, for example, 46110 cells, 48750 cells, 48110 cells, 48800 cells, or 46800 cells. In the numerical value representing the form factor, the first two numbers indicate the diameter of the cell, the next two numbers indicate the height of the cell, and the last number 0 indicates that the cross section of the cell is circular.

A battery cell according to an embodiment of the present invention may be a cylindrical battery cell having a substantially cylindrical shape, a diameter of about 46 mm, a height of about 110 mm, and a form factor ratio of 0.418.

A battery cell according to another embodiment may be a cylindrical battery cell having a diameter of about 48 mm, a height of about 75 mm, and a form factor ratio of 0.640.

A battery cell according to another embodiment may be a substantially cylindrical battery cell having a diameter of about 48 mm, a height of about 110 mm, and a form factor ratio of 0.418.

A battery cell according to another embodiment may be a substantially cylindrical battery cell having a diameter of about 48 mm, a height of about 80 mm, and a form factor ratio of 0.600.

A battery cell according to another embodiment may be a cylindrical battery cell having a substantially cylindrical shape, a diameter of about 46 mm, a height of about 80 mm, and a form factor ratio of 0.575.

Conventionally, battery cells having a form factor ratio of approximately 0.4 or less have been used. That is, conventionally, for example, 18650 cells, 21700 cells and the like have been used. For an 18650 cell, its diameter is approximately 18mm, its height is approximately 65mm, and the form factor ratio is 0.277. For a 21700 cell, its diameter is approximately 21 mm, its height is approximately 70 mm, and the form factor ratio is 0.300.

### [Forming device]

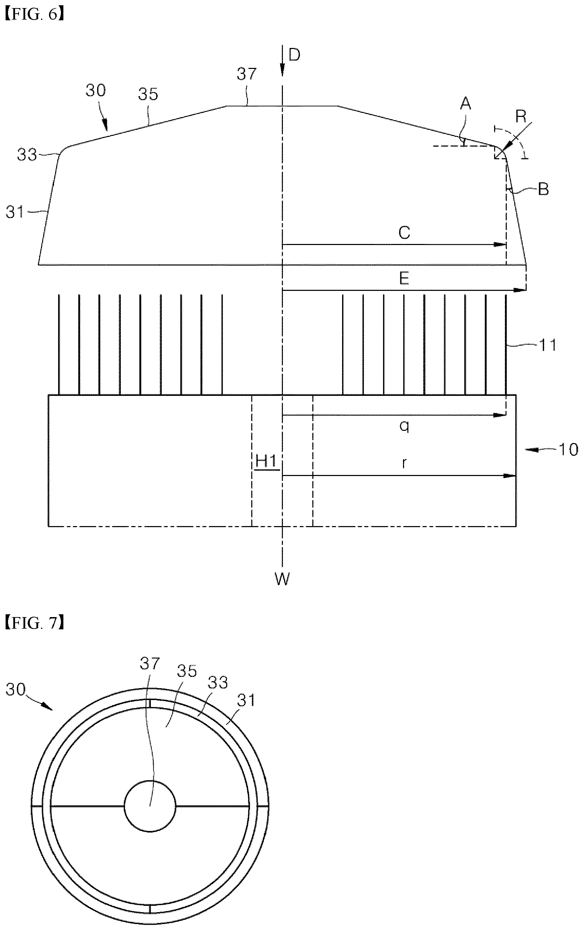

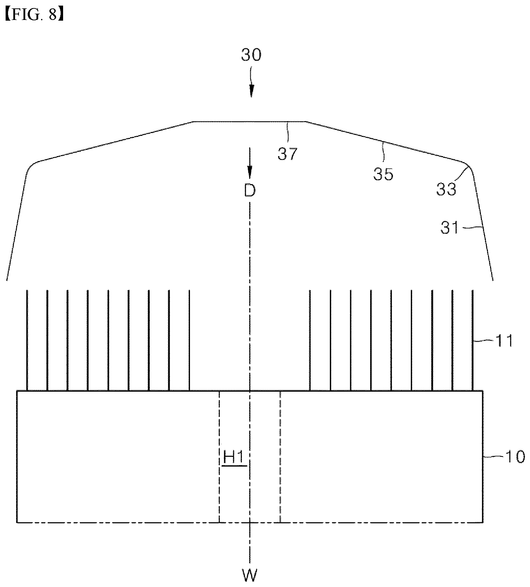

Hereafter, an example of the forming device in the present disclosure is described with reference to FIGS. 6 to 13.

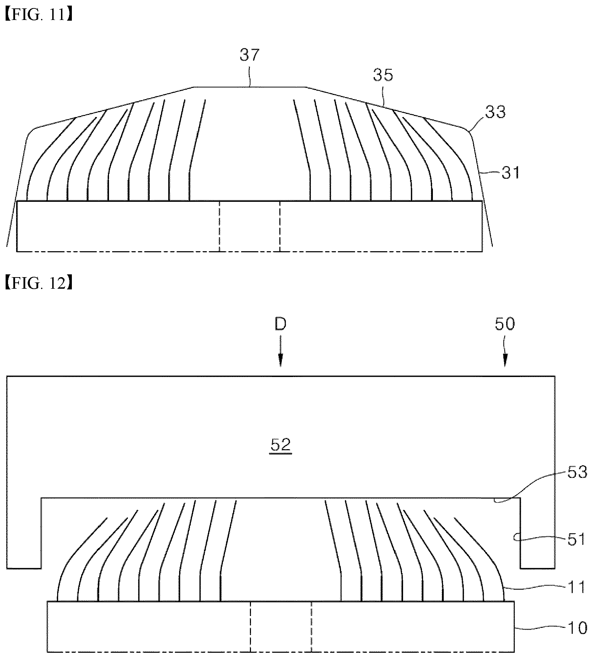

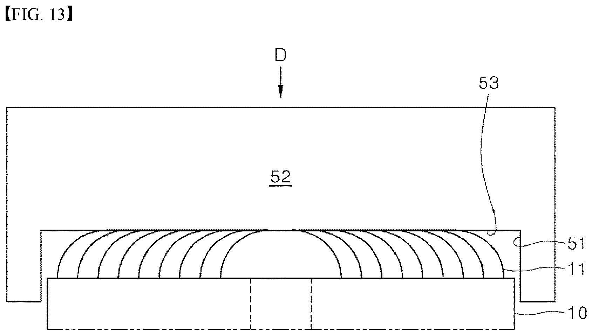

The forming device may comprise a forming jig 30 (see FIGS. 6 to 11) that bends the electrode tab at the axial end portion of the electrode assembly, in the radial direction, and a flattening jig 50 (see FIGS. 12 and 13) that planarizes the bent electrode tab further. The forming jig 30 and the flattening jig 50 may be made of steel.

The forming jig 30 is used to bend the electrode tab 11, straightly elongated in the axial direction and disposed spirally, radially inward without causing buckling. The flattening jig 50 is used to planarize the bent electrode tab 11 into a flat surface in a direction perpendicular to the axial direction.

The forming jig 30 has an inner surface of a predetermined groove or cup shape that contacts the electrode tab 11. The forming jig 30 comprises a flat surface 37 that corresponds to the center of the bottom of the cup, a bend inducing surface 35 that extends from the outer circumference of the flat surface 37 in the radial direction thereof, in the centrifugal direction, at a predetermined inclination angle A, a front end guide surface 33 that is provided at the outer circumference of the bend inducing surface 35 in the radial direction thereof, and a pre-forming perimeter surface 31 that connects to the outer circumference of the front end guide surface 33 in the radial direction thereof and forms the lateral wall of the cup.

In comparison of the forming jig 30 with an overturned cup, the flat surface 37 and the bend inducing surface 35 may correspond to the bottom portion of the cup, the pre-forming perimeter surface 31 may correspond to the side surface of the cup, and the front end guide surface 33 may correspond to a portion where the bottom of the cup and the side surface of the cup connect or a corner portion.

A portion of the forming jig 30, which processes the electrode tab 11, is the inner surface of the forming jig 30, contacting the electrode tab 11. Accordingly, the exterior of the forming jig 30 may differ from the exterior illustrated.

The pre-forming perimeter surface 31 is elongated from the base end connecting to the front end guide surface 33 in the pressing direction. The end of the pre-forming perimeter surface 31 in the direction where the pre-forming perimeter surface 31 is elongated constitutes a leading end of the pre-forming perimeter surface 31. The pre-forming perimeter surface 31 has a shape in which an inner radius increases from the base end toward the leading end.

The inner radius E of the leading end of the pre-forming perimeter surface 31 is greater than the outermost radius q of the electrode tab 11 disposed spirally, and the inner radius C of the base end of the pre-forming perimeter surface 31 is less than the outermost radius q of the electrode tab 11.

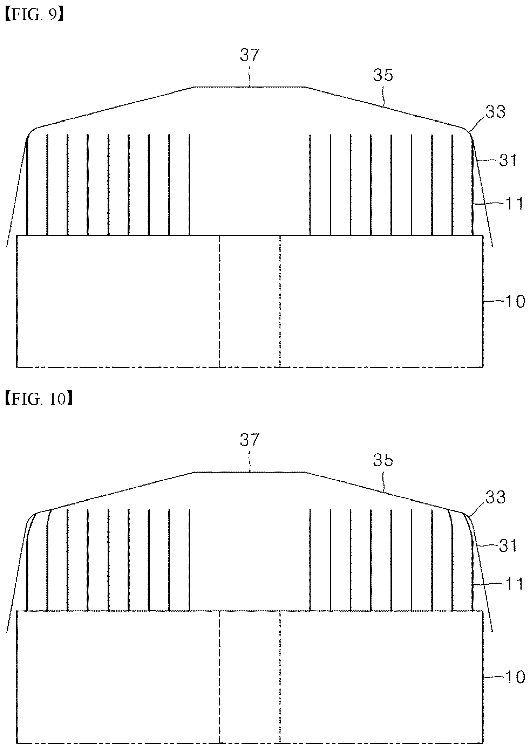

The forming jig 30 may approach to the first electrode tab 11 of the electrode assembly 10 in the state where the center of the forming jig 30 is aligned with the central axis Y of the electrode assembly 10. The first electrode tab 11 may be elongated further from the axial end portion of one side of the electrode assembly 10 in the axial direction thereof, and disposed spirally. Accordingly, a portion of the outer circumference side of the spirally-disposed first electrode tab 11, disposed in the last turn, may contact the forming jig 30 first, as illustrated in FIG. 9, and contact the pre-forming perimeter surface 31 of the forming jig 30 first.

A taper angle B formed between the pre-forming perimeter surface 31 and the pressing direction D may be 10 degrees to 30 degrees. In the case of a taper angle B of less than 10 degrees, the front end portion (the uppermost end) of the electrode tab 11 contacts the bend inducing surface 35 in the state where the pre-forming perimeter surface 31 fails to naturally bend the electrode tab 11 radially inwards, causing buckling of the electrode tab 11. Additionally, in the case of a taper angle B of greater than 30 degrees, the pre-forming perimeter surface 31 fails to naturally bend the electrode tab 11 radially inwards and presses the electrode tab 11 in the pressing direction D, causing buckling of the electrode tab 11.

Specifically, the taper angle B may be 18 degrees to 22 degrees. In the case of a taper angle B of 10 degrees or greater to less than 18 degrees, the pre-forming perimeter surface 31 induces the electrode tab 11 to naturally bend radially inwards, but does not act sufficiently. Additionally, in the case of a taper angle B of greater than 22 degrees and 30 degrees or less, the pre-forming perimeter surface 31 induces the electrode tab 11 to excessively bend radially inwards.

Preferably, the taper angle may be at about 19 degrees.

Considering a radial Z length of one turn in the windings of the electrode assembly 10 and the state where the electrode tab 11 can be removed in the last turn of the windings at the outer circumference side, the inner radius C of the base end may be 1.5 mm to 0.5 mm less than the radius of the electrode assembly. Preferably, the inner radius C of the base end may be about 1.0 mm less than the radius r of the electrode assembly 10.

In an example, the radius r of the electrode assembly 10 may be about 22 mm, and the inner radius C of the base end may be about 21.38 mm.

The front end guide surface 33 connects to the base end of the pre-forming perimeter surface 31. As illustrated in FIG. 10, the front end guide surface 33 prevents buckling of the electrode tab 11 in an unintended direction, caused by a sudden increase in the taper angle of the bend inducing surface 35 with respect to the pre-forming perimeter surface 31 in the pressing direction D and the application of excessive force to the electrode tab 11 in the pressing direction D, while guiding the front end portion (the upper end portion) of the electrode tab 11 that gently starts to be bent radially inwards by the pre-forming perimeter surface 31, such that the direction of the front end portion of the electrode is certainly turned to radially inward.

To this end, the front end guide surface 33 may have a gently curved surface, and the radius of curvature R of the curved surface may be 1 mm to 3 mm. In the case of a radius of curvature R of less than 1 mm, the bucking of the electrode tab 11 may occur unintentionally since great force is applied to the front end portion of the electrode tab 11 in the pressing direction D in the state where the direction of the electrode tab 11 does not change to the radially inward direction sufficiently. In the case of a radius of curvature R of greater than 3 mm, the effect of guiding the front end of the electrode tab 11 to turn inward in the radial direction is reduced, making it difficult to achieve a certain bending process of the electrode tab 11 with one processing of the forming jig 30.

Preferably, the radius of curvature R of the front end guide surface 33 may be about 2 mm.

The bend inducing surface 35 connects to the base end of the pre-forming perimeter surface 31 through the front end guide surface 33. That is, the bend inducing surface 35 is elongated from the front end guide surface 33 inwards, in the radial direction.

The bend inducing surface 35 inclines in a direction opposite to the pressing direction D, as it extends radially inwards. That is, as it approaches its center, its height gradually increases. The front end of the electrode tab 11, which is bent inward in the radial direction by being induced by the pre-forming periphery surface 31 and turned inward in the radial direction by being guided by the front guide surface 33, presses inward in the radial direction on an outer side surface of another front end of an electrode tab 11 neighboring one turn inward, thereby propagating bending deformation to neighboring electrode tabs 11 inward in a radial direction.

The bend inducing surface 35 presses an electrode tab 11 on a centrifugal side that propagates bending deformation to an electrode tab 11 on a centripetal side neighboring in a centripetal direction in a pressing direction D, so that bending progresses further. And after being propagated by an electrode tab 11 on a centrifugal side, a front end of an electrode tab 11 on a centripetal side that has been transmitted with bending deformation contacts with said bend induction surface 35, and its bending progresses further.

For the above-described process to be performed smoothly, an inclination angle A formed between the bend inducing surface 35 and a planar surface perpendicular to the central axis Y of the electrode assembly 10 may be 5 to 20 degrees. In the case of an inclination angle A of less than 5 degrees, the bend inducing surface 35 itself is almost a flat surface, causing buckling of the electrode tab 11, and the electrode tab 11 at the centripetal side contacts to the bend inducing surface 35 before the bend deformation is propagated from an adjacent electrode tab 11, causing buckling thereof. Additionally, in the case of an inclination angle of greater than 20 degrees, a stroke pressing the electrode tab 11 that is disposed at the centripetal side is short, and the pressing of the forming jig 30 is not enough to perform the process of bending the electrode tab 11 at the centripetal side.

Preferably, the inclination angle A may be 8 to 13 degrees. In the case of an inclination angle of 5 degrees or greater and less than 8 degrees, the electrode tab 11 at the centripetal side may be prevented from contacting the bend inducing surface 35 first before a bend deformation is propagated from an adjacent electrode tab 11, but the possibility of buckling of the electrode tab 11 may not be excluded completely since the electrode tab 11 at the centripetal side contacts the bend inducing surface 35 the inclination angle of which is not great, in the state where the electrode tab 11 at the centripetal side is not bent sufficiently by the electrode tab 11 at the centrifugal side. In the case of an inclination angle of greater than 13 degrees and 20 degrees or less, the electrode tab 11 at the centripetal side may be definitely prevented from contacting the bend inducing surface 35 first before a bend deformation is propagated from an adjacent electrode tab 1, but the bend inducing surface 35 may not induce a bend of the electrode tab 11 sufficiently.

More preferably, the inclination angle A may be about 10 degrees.

The bend inducing surface 35 may be further provided with a circular flat surface 37 at the radial inner side thereof. The flat surface 37 may be applied, in the case where an electrode tab 11 to be bent is omitted or removed in a partial section B1 at the core side of the electrode assembly 10 as illustrated in FIGS. 5 and 6, or the electrode tab 11 is not in a predetermined area of the center of the electrode assembly 10 in the radial direction thereof, since the inner diameter of a winding hole H1 is large, although the electrode tab 11 at the core side is not omitted as illustrated in FIG. 3.

The flat surface 37 can sufficiently induce the bending of the electrode tabs 11 located on the core side of the electrode assembly 10 where no further bending propagation to the neighboring electrode tabs radially inward is required.

According to the present disclosure, by using the forming jig 30 in a single step of processing, the bending of the electrode tabs 11 can be sufficiently induced. Accordingly, the forming device of the present invention can use the flattening jig 50 in the next step without additional forming jigs.

Referring to FIGS. 12 and 13, the flattening jig 50 may include a jig body 52 and a perimeter guide 51 extending from an outer circumferential surface of the jig body 52 in a pressing direction. The inner peripheral surface of the perimeter guide 51 is not directly involved in the bending and flattening processing of the electrode tabs 11.

The jig body 52 of the flattening jig 50 may comprise a flat pressing surface 53 facing in the pressing direction D. The pressing surface 53 may be disposed inside the perimeter guide 51 in the radial direction thereof. The jig body 52 of the flattening jig 50 may include the pressing surface 53 facing the pressing direction D. The pressing surface 53 may be located radially inward of the perimeter guide 51.

As shown in FIG. 12, the electrode tabs 11 of the electrode assembly 10 bent by the forming jig 30 are in a state where they are sufficiently bent radially inward so that no buckling occurs even when the pressing surface 53 presses in the pressing direction D.

Accordingly, the electrode tab 11 may be planarized with the flattening jig 50, immediately after the forming jig 30 is used. The flattening jig 50 presses the electrode tab 11 in the pressing direction D parallel with the central axis Y, to planarize the electrode tab 11. Then a sufficient number of electrode tabs overlap, and strength may be enough to weld a current collecting plate to the electrode tabs.

According to the present disclosure, by using the forming jig 30 and the flattening jig 50, two steps of bending processing that press the electrode tabs in a pressing direction can bend and flatten the electrode tabs radially inward and flatly.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the scope of the disclosure though not explicitly described in the description of the embodiments.

## Claims

1. A forming device for bending an electrode tab (11) in a radial direction and flattening the same, the electrode tab being exposed to an end portion of an electrode assembly (10) in an axial direction by extending a first electrode more axially than a separator, the electrode assembly being in a jelly-roll shape by laminating the first electrode, the separator, and a second electrode and winding them around a central axis (Y), comprising a forming jig (30) bending the electrode tab (11), wherein the forming jig (30) comprises:
a pre-forming perimeter surface (31) having an inner diameter that increases as it extends from a base end to a leading end in a pressing direction (D); and
a bend inducing surface (35) extending radially inward from the base end of the pre-forming perimeter surface (31), and inclined in an opposite direction to the pressing direction (D) as it goes radially inward,
wherein an inner radius (E) of the leading end of the pre-forming perimeter surface (31) is greater than an outermost radius (q) of the electrode tab (11), and
wherein an inner radius (C) of the base end of the pre-forming perimeter surface (31) is smaller than the outermost radius (q) of the electrode tab (11).

2. The forming device of claim 1, wherein a taper angle (B) formed by the pre-forming perimeter surface (31) with respect to the pressing direction (D) is 10 to 30 degrees.

3. The forming device of claim 2, wherein the taper angle (B) is 18 to 22 degrees.

4. The forming device of claim 1, wherein an inclination angle (A) formed by the bend inducing surface (35) with respect to a plane perpendicular to the central axis (Y) of the electrode assembly (10) is 5 to 20 degrees.

5. The forming device of claim 4, wherein the inclination angle (A) is 8 to 13 degrees.

6. The forming device of claim 1, wherein the inner diameter (E) of the leading end is 1.5 mm to 0.5 mm smaller than a radius of the electrode assembly (10).

7. The forming device of claim 1, wherein a front end guide surface (33) is provided between the pre-forming perimeter surface (31) and the bend inducing surface (35), and
wherein the front end guide surface (33) has a curved surface shape of a predetermined radius of curvature (R).

8. The forming device of claim 7, wherein the radius of curvature (R) is 1 mm to 3 mm.

9. The forming device of claim 1, wherein a flat surface (37) is provided at a radial inner end of the bend inducing surface (35).

10. The forming device of claim 1, wherein the pre-forming perimeter surface (31) and the bend inducing surface (35) of the forming jig (30) comprise a steel material.

11. The forming device of claim 1, further comprising a flattening jig (50) comprising a flat pressing surface (53) facing the pressing direction (D).

12. A forming method of an electrode tab (11) of an electrode assembly (10) using the forming device of claim 11, comprising:
a step of relatively moving the forming jig (30) in the pressing direction (D) parallel to the central axis (Y) and bending an electrode tab (11) of the electrode assembly (10) radially inwards; and
a step of relatively moving the flattening jig (50) in the pressing direction (D) parallel to the central axis (Y), and pressing and flattening the bent electrode tab (11) of the electrode assembly (10).
